Europäisches Patentamt

European Patent Office

Office européen des brevets

(11) Publication number: **0 221 660**
A1

(12) **EUROPEAN PATENT APPLICATION**

(21) Application number: **86307300.3**

(22) Date of filing: **23.09.86**

(51) Int. Cl.⁴: **G 01 B 21/06**
**G 05 D 5/00**

(30) Priority: **27.09.85 GB 8523838**

(43) Date of publication of application:
**13.05.87 Bulletin 87/20**

(84) Designated Contracting States:
**AT BE CH DE FR GB IT LI LU NL SE**

(71) Applicant: **Smith Engineering Projects Limited**
**Mellor Street**
**Rochdale Lancashire OL12 6AB(GB)**

(72) Inventor: **Gaskell, Leon**
**12 Ramsey Close**
**Lytham St Annes Lancashire(GB)**

(74) Representative: **Lawrence, John Gordon et al,**
**McNeight & Lawrence Regent House Heaton Lane**
**Stockport, Cheshire SK4 1BS(GB)**

(54) **Measuring apparatus.**

(57) There is disclosed apparatus for measuring the linear feed of a longitudinal strip such as carpet through a cutting station (13). Means (14) in contact with the strip for sensing advancement thereof as well as means (PE1 and PE2) for detecting movement of the strip through longitudinally spaced positions are provided. A microprocessor (20) calculates the slip factor and operates cutting means to cut the strip accurately into required lengths.

FIG.1

EP 0 221 660 A1

## MEASURING APPARATUS

This invention concerns measuring apparatus and more particularly apparatus for measuring the linear feed of a longitudinally extending strip of sheet material such as carpet, for example, through a cutting station to enable the strip to be cut into desired predetermined lengths. Such measuring apparatus is hereinafter called measuring apparatus of the kind referred to.

The length of strip fed is usually determined by means of a wheel engaging the upper surface of the strip and which is rotated by advancement of the strip therebeneath. The wheel drives mechanism to generate a pulse for each predetermined increment - usually 1mm - of advance. The pulses are counted to determine length of feed.

It is well known that some slip occurs between the periphery of the wheel and the surface of the strip and that this slip will vary in dependence upon a number of factors including, most importantly, the precise characteristics of the strip.

It is well known to set the count required for a given length of feed taking into consideration the expected slip, whether determined empirically or otherwise. This is not always done or done with sufficient accuracy to ensure cut lengths within permitted tolerances.

It is an object of the present invention to provide measuring apparatus of the kind referred to which overcomes the disadvantage aforesaid.

According to the present invention there is provided measuring apparatus of the kind referred to including means for sensing advancement of the strip and recording the apparent number of fixed length increments advanced, means for detecting movement of the leading edge of the strip through two longitudinally spaced datum positions separated by a known distance, means for comparing the recorded count of increments of advancement between said datum positions with the actual number of said increments in said known distance and means for calibrating the apparatus to compensate for any difference in the count from the expected value.

The calibration may be effected only at the first cut of each strip or group of strips of like kind or may be effected on each cut whereby the compensation factor is continually updated to take account of variations in properties along the length of the strip or variations in ambient conditions which might affect slip.

The datum position nearer to the sensing means may be spaced downstream from the cutting station by a fixed known number of said increments whereby any error arising from starting the count when feeding a strip whose leading end is not accurately located at the cutting station may be eliminated.

The movement detecting means may be photo-electric devices, and the sensing means may be a wheel engaging the surface of the strip and adapted to be driven by advancement thereof.

The invention will be further apparent from the following description, with reference to the figures of the accompanying drawings, which show, by way of example only, one form of carpet cutting machine having measuring apparatus embodying the invention.

Of the drawings:-

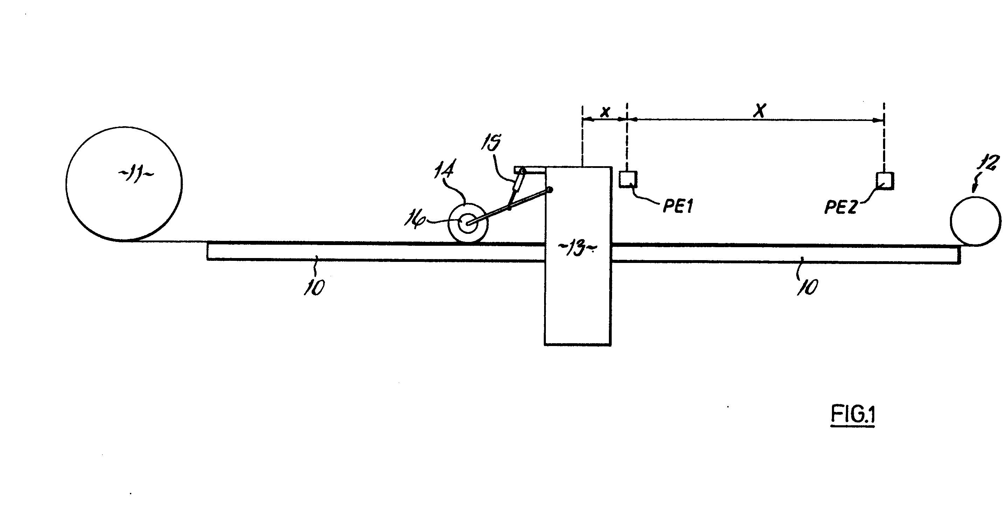

Figure 1 shows a side elevation of the cutting machine;

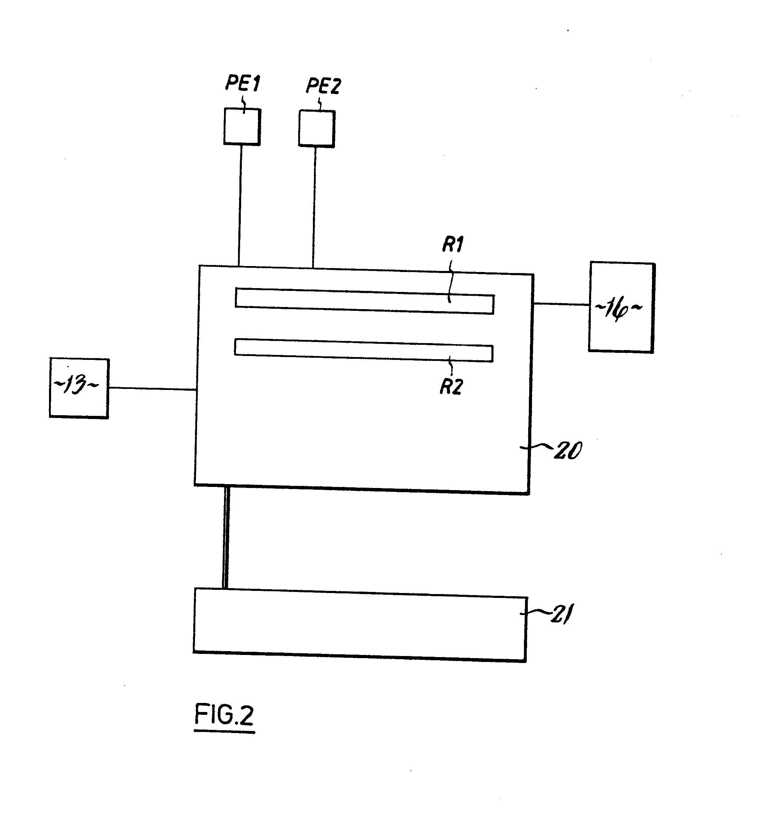

and Figure 2 is a diagrammatic representation of a microprocessor control.

Referring now to the drawings, it will be seen that the carpet cutting machine comprises a horizontally extending table 10 over which carpet may be fed from a supply roll 11 thereof to take-up means generally indicated at 12. The table 10 extends to either side of a cross cutter machine 13. A measuring wheel 14 engages the upper surface of carpet travelling over the table 10 under the influence of a ram 15 and is connected with an encoder device 16 adapted to deliver a pulse for each one millimetre of displacement of the periphery of the wheel under the action of the moving carpet.

Downstream of the cross cutter 13 are two spaced photoelectric cells adapted to detect movement of a leading edge of carpet therebeneath. The first PE1 is positioned a short distance x mm from the datum position at which the cross cutter 13 makes its cut whilst the second PE2 is positioned a somewhat greater distance X mm downstream of the first. Typical but merely illustrative values for x and X are 90 and 2000 respectively.

A microprocessor 20 is provided having a keyboard 21 through which a desired cut length of carpet may be input. There are two registers R1 and R2 whose values may be compared to control the machine by arresting carpet feed and operating the cross cutter 13 when their values are equal.

In use, as each length of carpet is cut the operator keys in the required length L expressed in millimetres. This length is held in RAM in the microprocessor 20. As the leading edge of the carpet passes under the cell PE1 the count in register R1 is set at x. As feed of the carpet continues the count in register R1 is incremented by one for each pulse received from the encoder device 16. When the leading edge of the carpet is detected by cell PE2 the count N in register R1 is compared with the constant (x + X) to calculate the slip occurring between the carpet and the periphery of the wheel 14.

The slip factor S is given by the equation

$$S = \frac{X}{N-x}$$

The register R2 is now loaded with the value V where

$$V = (L-x)S + x$$

Feed of carpet continues until the count in register R1 is equal to that in register R2 when the cross cutter is operated.

If desired the slip factor S may be calculated only once at the start of processing a particular kind of a carpet or a new supply roll thereof when the register R2 can be set immediately the required length is input.

Slightly less accurate but nonetheless acceptable results amy be obtained by using equations for the values S and V as follows:-

$$S = \frac{x + X}{N}$$

$$V = LS$$

By providing and positioning the cell PE1 spaced from the datum of the cross cutter 13 any inaccuracy ·which might otherwise arise from measuring the feed from the start whenever the leading edge is not exactly at the datum is eliminated.

It will be appreciated that it is not intended to limit the invention to the above example only, many variations, such as might readily occur to one skilled in the art, being possible, without departing from the scope thereof.

## CLAIMS

1.     Measuring apparatus of the kind referred to including means for sensing advancement of the strip and recording the apparent number of fixed length increments advanced, means for detecting movement of the leading edge of the strip through two longitudinally spaced datum positions separated by a known distance, means for comparing the recorded count of increments of advancement between said datum positions with the actual number of said increments in said known distance and means for calibrating the apparatus to compensate for any difference in the count from the expected value.

2.     Measuring apparatus according to claim 1 wherein the calibration is effected only at the first cut of each strip or group of strips of like kind.

3.     Measuring apparatus according to claim 1 wherein the calibration is effected on each cut whereby the compensation factor is continually updated to take account of variations in properties along the length of the strip or variations in ambient conditions which might affect slip.

4.     Measuring apparatus according to any one of .claims 1-3 wherein the datum position nearer to the sensing means is spaced downstream from the cutting station by a fixed known number of said increments.

5. Measuring apparatus according to any preceding claim wherein each detecting means is a photo-electric device.

6. Measuring apparatus according to any one of claims 1-4 wherein the sensing means comprises a wheel engaging the surface of the strip and adapted to be driven by advancement of the strip.

7. Measuring apparatus according to any preceding claim including a microprocessor into which an operator may input the desired length of strip to be cut, the microprocessor receiving inputs from the sensing means and the detecting means and being programmed to calculate the slip factor any operate cutting means at the cutting station.

x

X

15

14

~11~

16

~13~

PE1

PE2

12

10

10

1/2

FIG.1

022166C

FIG.2

| | DOCUMENTS CONSIDERED TO BE RELEVANT | | EP 86307300.3 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X<br>Y | <u>DE - B - 1 463 718</u> (UKRAINSKIJ)<br><br>* Totality *<br><br>-- | 1,2,4,<br>5<br>3,6 | G 01 B 21/06<br>G 05 D 5/00 |
| Y | <u>US - A - 4 041 610</u> (VESUGI et al.)<br>* Totality *<br><br>-- | 3,6 | |
| X | <u>DE - B2 - 2 234 591</u> (GENERAL<br><u>ELECTRICS</u>)<br>* Totality *<br><br>-- | 1 | |
| X | <u>DD - A - 72 587</u> (LEIDERT)<br>* Totality *<br><br>-- | 1 | |
| X | <u>DD - A - 87 668</u> (BRANDT)<br>* Totality *<br><br>-- | 1 | TECHNICAL FIELDS SEARCHED (Int. Cl.4) |
| A | <u>US - A - 4 447 955</u> (STUTZ)<br>* Totality *<br><br>-- | | G 01 B 7/00<br>G 01 B 11/00<br>G 01 B 21/00<br>G 05 D 5/00 |
| A | <u>GB - A - 2 098 752</u> (MOLINS)<br>* Totality *<br><br>---- | | |

The present search report has been drawn up for all claims

| Place of search<br>VIENNA | Date of completion of the search<br>09-12-1986 | Examiner<br>TOMASELLI |
|---|---|---|